# EUROPEAN PATENT APPLICATION

(11) **EP 1 211 863 A2**
(43) Date of publication of application: **05.06.2002**
(21) Application number: 01125345.7
(22) Date of filing: 29.10.2001
(51) Int. Cl.: H04L 29/06

(54) **Fraud management system and method for collecting and distributing fraudulent information to multiple network service providers**

(30) Priority: 22.11.2000 US 718575
(71) Applicant: Alcatel USA Sourcing, L.P., Plano, Texas 75075-5813 (US)
(72) Inventor: Stevens, Gilman R., Fairview, TX 75069 (US); Mani, Babu V., Plano, TX 75025 (US)
(74) Representative: Dreiss, Fuhlendorf, Steimle & Becker

(57) **Abstract**

A fraud management system (100) and method (600, 700) are described that can collect fraudulent information (104) and distribute the collected fraudulent information (104) among network service providers (106). In particular, the fraud management system (100) includes a controller (102) capable of interfacing with fraud detection programs (software) deployed in participating networks to collect fraudulent information (104) and further capable of distributing the collected fraudulent information (104) to one or more network service providers (clients) (106) thus enabling each network service provider (106) to identify and block a fraudulent call (or fraudulent traffic)(110) using the distributed fraudulent information (104). The controller (102) can collect the fraudulent information (104) from one of the network service providers (106) and/or the controller (102) can generate the fraudulent information (104) itself. For instance, the fraud management system (100) can generate the fraudulent information (104) itself by deploying fraud detection programs throughout the network.

## Description

### BACKGROUND OF THE INVENTION

### Field of the Invention

The present invention relates in general to the communications field and, in particular, to a fraud management system and method capable of collecting fraudulent information and distributing that fraudulent information to participating network service providers.

### Description of Related Art

In the communications field, telephone fraud is an ever-increasing problem that can be very expensive to telephone users and telephone companies. Telephone fraud schemes are often associated with 800/888/900 numbers and calling cards. For instance, one of the most common telephone fraud schemes occurs when a calling card is stolen, duplicated and distributed to many users. These users then use the stolen calling card to make fraudulent calls. The network service provider servicing the calling card eventually becomes aware that the calling card has been stolen and refuses to approve the termination of a call associated with the stolen calling card.
Unfortunately, this network service provider is often the only service provider that is aware of the stolen calling card and, as such, other network service providers must use valuable resources to query the calling card service provider about a calling card call originating at their network only to find out that the call is associated with a stolen calling card.

Today, network service providers must query a calling card validation center about calling card calls originating at their networks because the calling card service provider is not able to effectively distribute to other network service providers information about the calling cards that have been stolen. If these network service providers were timely informed of the fraudulent information associated with the stolen calling card, then these network service providers would be able to block the fraudulent call at their network without using valuable resources to query the calling card validation center about the status of the calling card. In other words, at present, fraud detection schemes are localized or deployed at a specific network and the detected fraudulent information is not shared with other network service providers. Accordingly, there has been a need for a fraud management system and method that are capable of collecting fraudulent information and distributing that fraudulent information to participating network service providers. This need and other needs are satisfied by the fraud management system and method of the present invention.

### BRIEF DESCRIPTION OF THE INVENTION

The present invention includes a fraud management system and method that are capable of collecting fraudulent information and distributing the collected fraudulent information to participating network service providers. In particular, the fraud management system includes a controller capable of collecting fraudulent information and further capable of distributing the collected fraudulent information to participating network service providers thus enabling each network service provider to identify and block a fraudulent call using the distributed fraudulent information. The controller can collect the fraudulent information from one of the network service providers and/or the controller can generate the fraudulent information itself. For instance, the fraud management system can generate the fraudulent information itself by deploying fraud detection programs throughout the network.

### BRIEF DESCRIPTION OF THE DRAWINGS

A more complete understanding of the present invention may be had by reference to the following detailed description when taken in conjunction with the accompanying drawings wherein:
FIGURE 1 is a block diagram illustrating an exemplary fraud management system of the present invention;
FIGURE 2 is a block diagram illustrating one way the fraud management system shown in FIGURE 1 can collect and distribute fraudulent information to multiple network service providers;
FIGURE 3 is a block diagram illustrating another way the fraud management system shown in FIGURE 1 can collect and distribute fraudulent information to multiple network service providers;
FIGURE 4 is a block diagram illustrating yet another way the fraud management system shown in FIGURE 1 can collect and distribute fraudulent information to multiple network service providers;
FIGURE 5 is a block diagram illustrating still yet another way the fraud management system shown in FIGURE 1 can collect and distribute fraudulent information to multiple network service providers;
FIGURE 6 is a flowchart illustrating the steps of a preferred method of the present invention from the viewpoint of the fraud management system; and
FIGURE 7 is a flowchart illustrating the steps of a preferred method of the present invention from the viewpoint of a network service provider.

### DETAILED DESCRIPTION OF THE DRAWINGS

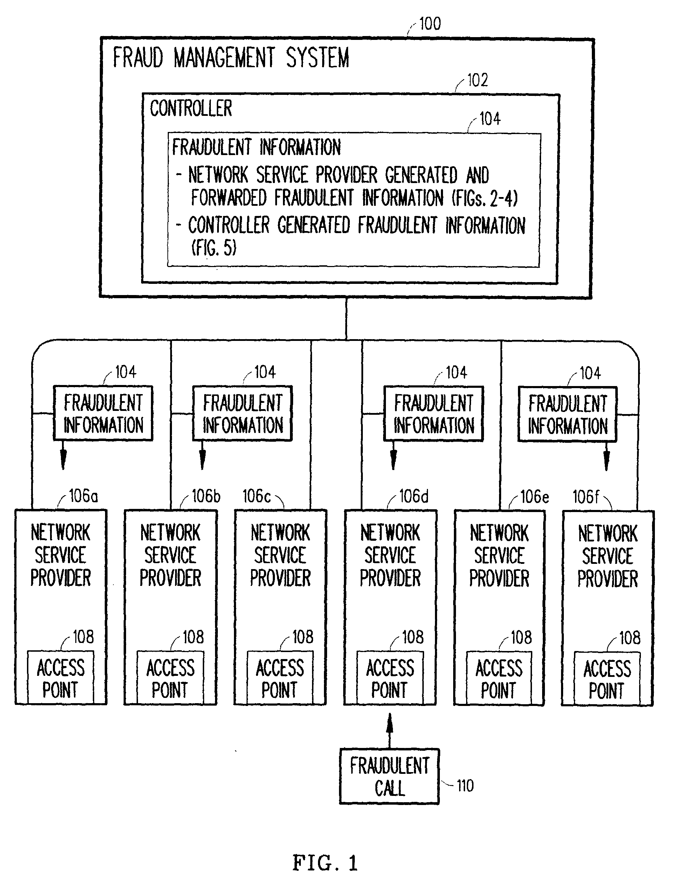

Referring to FIGURES 1-7, there are disclosed preferred embodiments of a fraud management system 100 and methods 600 and 700 in accordance with the present invention.

Referring to FIGURE 1, there is a block diagram illustrating the fraud management system 100. Essentially, the fraud management system 100 includes a controller 102 that is capable of collecting fraudulent information 104 and further capable of distributing the collected fraudulent information 104 to participating network service providers 106a, 106b, 106c, 106d, 106e and 106f (only six shown). A network service provider can be an Internet Service Provider (e.g., AOL), a Long Distance Service Provider (e.g., AT&T, MCI), an Internet Access Provider etc...

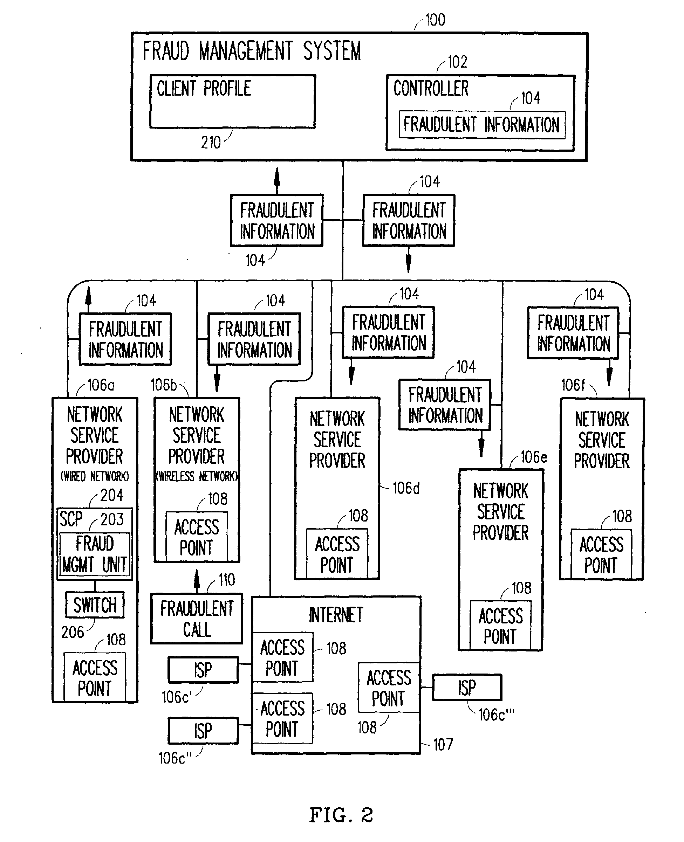

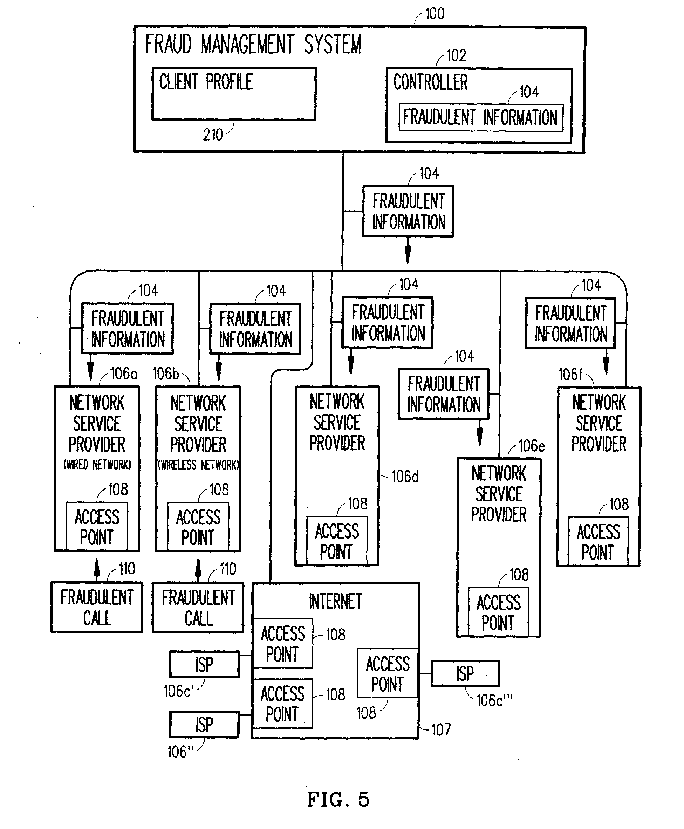

The controller 102 can collect the fraudulent information 102 from one of the network service providers 106a, 106b, 106c, 106d, 106e or 106f (see FIGURES 2-4) and/or the controller 102 can itself generate the fraudulent information 104 (see FIGURE 5). For instance, the fraud management system can generate the fraudulent information 104 itself by deploying fraud detection programs throughout the network. The fraudulent information 104 can be associated with detected fraud or suspected fraud. After the controller 102 distributes the collected fraudulent information 104, each network service provider 106a, 106b, 106d and 106e (only four shown to receive fraudulent information 104) can then block at an access point 108 any future fraudulent calls 110 (only one shown) that can be identified by using the distributed fraudulent information 104. A fraudulent call 110 can include any kind of fraudulent traffic or activity. A more detailed description is provided below about the network service providers 106a, 106b, 106c, 106d, 106e and 106f, the fraudulent information 104 and the various capabilities of the fraud management system 100.

Referring to FIGURE 2, there is a block diagram illustrating one way the fraud management system 100 can collect and distribute the fraudulent information 104 to participating network service providers 106a, 106b, 106c, 106d, 106e and 106f. In this example, the controller 102 receives the fraudulent information 104 from network service provider 106a associated with a wired network. The network service provider 106a generates and forwards the fraudulent information 104 to the controller 102 after it becomes aware of a fraudulent scheme. For instance, the network service provider 106a maybe a network that provides calling cards to their customers and has recently been notified that one of the calling cards was stolen. Thus, any future call made by a calling party using the stolen calling card would be considered a fraudulent call.

More specifically, a fraud management unit 203 within a service control point (SCP) 204 (as shown) or a carrier switch 206 of the network service provider 106a could detect, collect and forward the fraudulent information 104 to the controller 102. In fact, the fraud management unit 203 could be notified of a fraud scheme or it could detect a fraud scheme using real time tools and/or post call tools. In the present example, the fraudulent information 104 forwarded to the controller 102 could include details such as the number of the stolen calling card.

Upon receiving the fraudulent information 104, the controller 102 could interact with a client profile 210 (described below) and then distribute the fraudulent information 104 to the network service providers 106b, 106d, 106e and 106f (for example). The network service providers 106a, 106b, 106d, 106e and 106f could then block at their respective access point 108 any future fraudulent calls 110 (only one shown at network service provider 106b) that can be identified by using with the distributed fraudulent information 104.

The immediate blocking of the fraudulent call 110 by the network service provider 106b is a marked improvement over the state-of-the-art where the network service provider 106b would have used valuable resources to query network service provider 106a about the fraudulent call 110 originating at their network only to later find out that the call is associated with a stolen calling card. For instance, if the fraudulent call 110 is not blocked at the access point 108 of network service provider 106b (e.g., originating network) as discussed in the present invention, then the fraudulent call 110 may have gone through and used the valuable resources of 2, 3, 4, 5 and up to 7 or more networks before reaching and being blocked by service network provider 106a (e.g., servicing network).Thus, the fraud management system 100 distributing the fraudulent information 104 to the network service providers 106b, 106d, 106e and 106f enables the blocking of future fraudulent calls 110 at origination which in turn saves the valuable resources of the originating network, carrying network(s) and the terminating network.

In addition, the fraud management system 100 can include the client profile 210 that contains instructions from one or more network service providers 106a, 106b, 106c, 106d, 106e and 106f. These instructions indicate how and when each network service provider 106a, 106b, 106c, 106d, 106e and 106f would like to be notified if at all about the collected fraudulent information 104. In other words, the client profile 210 contains the service agreement between the fraud management system 100 and the clients. Basically, the client profile 210 specifies the individual needs of the client networks such as "when", "what" and "how" the collected fraud information 104 is to be distributed to each client network. For instance, the Internet Service Providers (ISPs) 106c', 106c" and 106c"' (only three shown) making up the network service provider 106c would likely not want to receive the fraudulent information 104 about the stolen calling card because a stolen calling card does not have much to do with Internet communications.

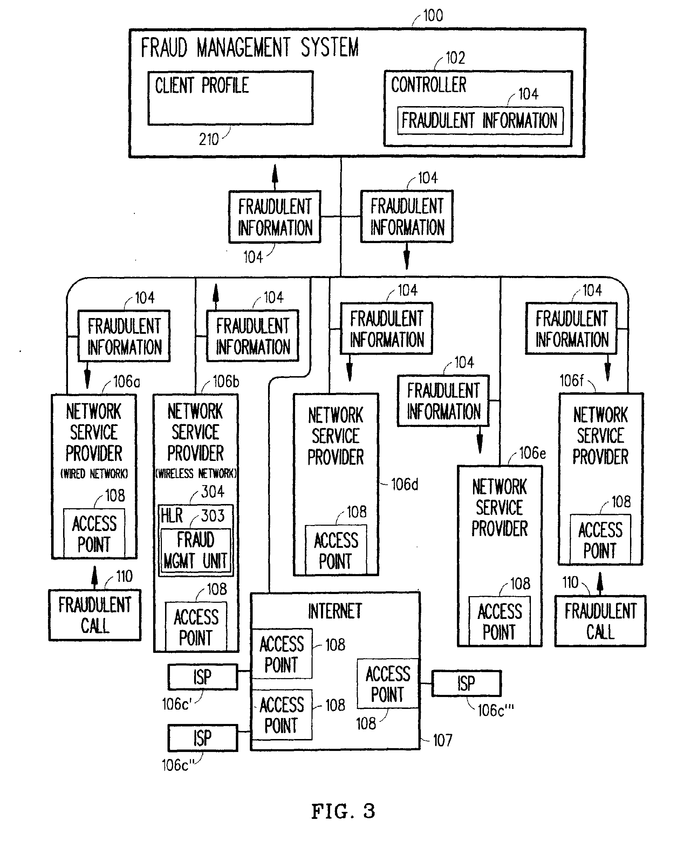

Referring to FIGURE 3, there is a block diagram illustrating another way the fraud management system 100 can collect and distribute the fraudulent information 104 to participating network service providers 106a, 106b, 106c, 106d, 106e and 106f. In this example, the controller 102 receives the fraudulent information 104 from network service provider 106b associated with a wireless network. The network service provider 106b generates and forwards the fraudulent information 104 to the controller 102 after it becomes aware of a fraudulent scheme. For instance, the network service provider 106b may learn of or detect a telephone toll fraud scheme which involves a scam artist tricking people into dialing what appears to be an 800/888 free call but is instead a 900 toll call. In other words, the scam artist illegally connects what is supposed to be an 800/888 free call to a 900 toll number and charges a high fee to the calling party for making the supposedly free 800/888 call.

A fraud management unit 303 associated with a home location register (HLR) 304 of the network service provider 106b could detect, collect and forward the fraudulent information 104 to the controller 102. Like above, the fraud management unit 303 could be notified of a fraud scheme or it could detect a fraud scheme using real time tools and/or post call tools. In the present example, the fraudulent information 104 forwarded to the controller 102 can include details about the 800/888 number and/or the 900 toll number.

Upon receiving the fraudulent information 104, the controller 102 could interact with the client profile 210 and distribute the fraudulent information 104 to the network service providers 106a, 106d, 106e and 106f (for example). The network service providers 106a, 106d, 106e and 106f could then block at their respective access point 108 any fraudulent calls 110 (only two shown at network service providers 106a and 106f) that can be identified by using the distributed fraudulent information 104.

The immediate blocking of the fraudulent calls 110 at network service providers 106a and 106f is a marked improvement over the state-of-the-art where network service providers 106a and 106f (e.g., originating networks), the carrying network(s) and the terminating network would have used valuable resources to bill the calling parties and connect the 800/888 calls to the 900 toll number. For instance, if the fraudulent calls 110 are not blocked at the access points 108 of the network service providers 106a and 106f like they would be using the present invention, then the fraudulent calls 110 may have gone through and used the valuable resources of 2, 3, 4, 5 and up to 7 or more networks before reaching the terminating network. Thus, the fraud management system 100 distributing the fraudulent information 104 to network service providers 106a, 106d, 106e and 106f enables the blocking of any future fraudulent calls 110 at origination which in turn saves the valuable resources of the originating network, the carrying network(s) and the terminating network.

The fraud management system 100 can include the client profile 210 that contains instructions from one or more network service providers 106a, 106b, 106c, 106d, 106e and 106f. These instructions indicate how and when each network service provider 106a, 106b, 106c, 106d, 106e and 106f would like to be notified if at all about the collected fraudulent information 104. For instance, the Internet Service Providers (ISPs) 106c', 106c'', 106c''' (only three shown) associated with the Internet 107 would likely not want to receive the fraudulent information 104 about 800/888 free calls being translated and connected to 900 toll calls because these calls do not have much to do with Internet communications.

Moreover, network service provider 106f may want to save money on service fees from the fraud management system 100 by not having them distribute the fraudulent information 104 associated with the aforementioned 900 telephone toll fraud scheme but instead would like to receive the fraudulent information 104 associated with the aforementioned stolen calling card. In other words, each network service provider 106a, 106b, 106c, 106d, 106e and 106f can request that the fraudulent information 104 distributed to them have a certain fraud level. For instance, the controller 102 (network service provider 106a, 106b, 106c, 106d, 106e or 106f) can assign a specific fraud level to each set of collected fraudulent information 104 that can range from actual fraud (e.g., the stolen calling card) to different levels of possible fraud (e.g., the 900 toll fraud scheme can be assigned a highly suspicious fraud level).

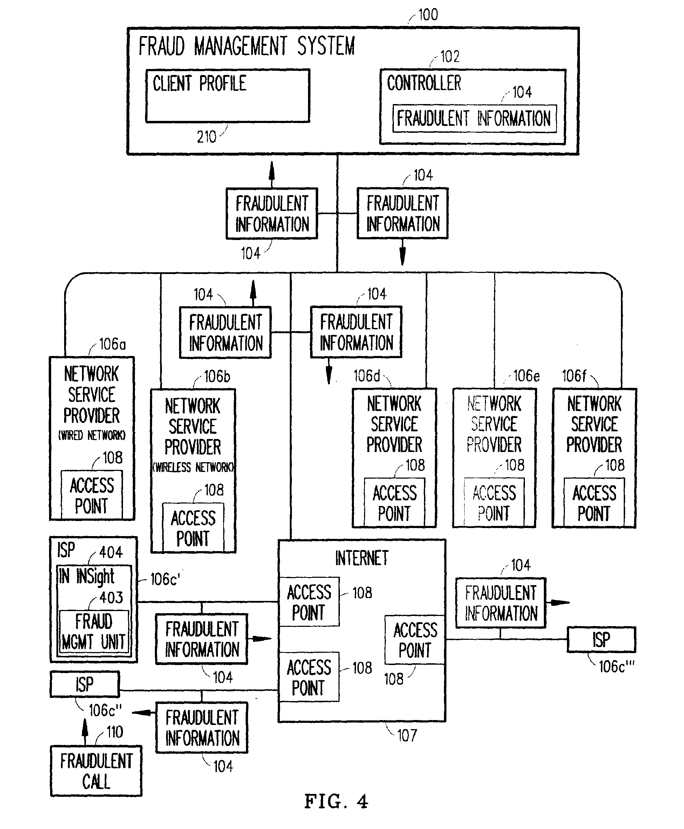

Referring to FIGURE 4, there is a block diagram illustrating yet another way the fraud management system 100 can collect and distribute the fraudulent information 104 to participating network service providers 106a, 106b, 106c, 106d, 106e and 106f. In this example, the controller 102 receives the fraudulent information 104 from the ISP 106c' that manages a host site on the Internet 107. Each ISP 106c', 106c'' and 106c''' can generate and forward fraudulent information 104 to the controller after they become aware of a fraudulent scheme. For instance, ISP 106c' may learn of a domain name, Internet Protocol (IP) address and/or an originating destination that is responsible for bombarding their web site with queries in an attempt to shutdown the web site.

More specifically, a fraud management unit 403 associated with an intelligent network 404 (e.g., IN INSight) of ISP 106c' could detect, collect and forward the fraudulent information 104 to the controller 102. Like above, the fraud management unit 403 could be notified of a fraud scheme or it could detect a fraud scheme using real time tools and/or post call tools. In the present example, the fraudulent information 104 forwarded to the controller 102 can include details about the domain name, IP address and/or the originating destination of the person attempting to shut-down the web site managed by ISP 106c'.

Upon receiving the fraudulent information 104, the controller 102 could interact with the client profile 210 and then distribute the fraudulent information 104 to the other ISPs 106c'' and 106c''' (for example). The ISPs 106c'' and 106c''' could then block or filter at their respective access point 108 any future fraudulent calls 110 (only one shown at the host site of ISP 106c'') that can be identified by using the distributed fraudulent information 104. In addition, ISP 106c'' or 106c''' could block at the source the IP address that is bombarding other web sites with fraudulent calls if they happen to provide Internet service to that person. Of course, the immediate blocking or filtering of a fraudulent call 110 at its source or at other web sites is a marked improvement over the state-of-the-art where the ISPs 106c', 106c'' and 106c''' have no effective means of communicating such fraudulent information 104 to each other.

Again, the fraud management system 100 can include the client profile 210 that contains instructions from one or more network service providers 106a, 106b, 106c, 106d, 106e and 106f. These instructions indicate how and when each network service provider 106a, 106b, 106c, 106d, 106e and 106f would like to be notified if at all about the collected fraudulent information 104. For instance, the ISPs 106c', 106c'' and 106c''' (only three shown) associated with the Internet 107 would likely want to receive the fraudulent information 104 in the example above because this information relates to Internet communications. Whereas, the network service providers 106a, 106b, 106d, 106e and 106f may want to receive this fraudulent information 104 only if they provide some sort of Internet service to their customers (not shown).

Referring to FIGURE 5, there is a block diagram illustrating still yet another way the fraud management system 100 can collect and distribute the fraudulent information 104 to participating network service providers 106a, 106b, 106c, 106d, 106e and 106f. Basically, the controller 102 in this example internally generates the fraudulent information 104 as compared to the aforementioned examples described above with respect to FIGURES 2-4 where the controller 102 receives the fraudulent information 104 from one of the network service providers 106a, 106b, 106c, 106d, 106e and 106f.

In particular, the controller 102 generates the fraudulent information 104 itself whenever it can identify a new fraud methodology based on a new fraud type. In other words, the fraudulent information 104 could contain one or more sets of rules of which if one or more conditions exist in a particular rule then there is fraud or there is a good chance of fraud. In fact, he controller 102 could identify any of the fraudulent schemes described above with respect to FIGURES 2-4 or it could identify a new fraudulent scheme that none of the network service providers 106a, 106b, 106c, 106d, 106e and 106f have experienced before. Like above, the controller 102 can identify a fraudulent scheme using real time tools or post call tools.

The controller 102 may generate fraudulent information 104 based on a recently detected telephone toll fraud scheme which for example involves a scam artist tricking people into calling what appears to be a long distance domestic call but is instead a costly international call. In particular, the controller 102 may identify a telephone toll fraud scheme where a scam artist is currently promoting calls having an 809 area code which if dialed connects the calling party to someone in the Caribbean who charges the calling party a large fee. The scam artist can promote these 809 calls in uniquely deceptive ways. For instance, the scam artist may leave an "urgent" message on an answering machine, pager or computer of a person trying to get them to call the 809 number. The message often falsely claims that a family member of the person has been injured, that they have won a prize, or that there is a problem with their credit. If the person returns the call, they are likely to be charged a high calling charge. The controller 102 in one way or the other learns of this scheme and collects the fraudulent information 104 associated with this fraudulent scheme.

After detecting a telephone fraud scheme, the controller 102 would generate the fraudulent information 104 which in the present example may include details about the 809 number which has an uncommonly large call back rate. The controller 102 can even assign the newly identified telephone fraud scheme a fraud level. In the present example, the fraud level of the 809 fraudulent calling scheme would likely be assigned a moderate suspicion fraud level since the provider of the present invention may not have all the details associated with the fraudulent scheme.

The controller 102 could interact with the client profile 210 and then distribute the fraudulent information 104 to the network service providers 106a, 106b, 106d, 106e and 106f (for example). The network service providers 106a, 106b, 106d, 106e and 106f could then block at their respective access point 108 any future fraudulent calls 110 (only two shown at network service providers 106a and 106b) that can be identified by using the distributed fraudulent information 104.

Again, the immediate blocking of the fraudulent calls 110 by the network service providers 106a and 106b is a marked improvement over the state-of-the-art where the network service providers 106a and 106b (e.g., originating networks), the carrying network(s) and the terminating network would have used valuable resources to bill the calling parties and connect the 809 call to the international called party. For instance, if the fraudulent calls 110 are not blocked at the access points 108 of the network service providers 106a and 106b like they would be using the present invention, then the fraudulent calls 110 may have gone through and used the valuable resources of 2, 3, 4, 5 and up to 7 or more networks before reaching the terminating network. Thus, the fraud management system 100 distributing the fraudulent information 104 to the network service providers 106a, 106b, 106d, 106e and 106f enables the blocking of any future fraudulent calls 110 at origination which in turn saves the valuable resources of the originating network, the carrying network(s) and the terminating network.

The fraud management system 100 can include the client profile 210 that contains instructions from one or more network service providers 106a, 106b, 106c, 106d, 106e and 106f. These instructions indicate how and when each network service provider 106a, 106b, 106c, 106d, 106e and 106f would like to be notified if at all about the collected fraudulent information 104. For instance, the ISPs 106c', 106c" and 106c"' (only three shown) associated with the Internet 107 would likely not want to receive the fraudulent information 104 about the 809 number and similar numbers because these calls do not have much to do with Internet communications. Moreover, the operator of the network service provider 106f may want to save money on service fees from the fraud management system 100 by not having them distribute the fraudulent information 104 associated with the aforementioned 809 telephone toll fraud scheme but instead would like to receive the fraudulent associated with the aforementioned stolen calling card.

It should be understood that the fraud management system 100 could be owned and operated by a company that provides the aforementioned service to network service providers 106a, 106b, 106c, 106d, 106e and 106f. The company can offer the service for a flat fee or at a cost that depends on the number of times the fraud management system 100 forwards the fraudulent information 104 to a particular network service provider 106a, 106b, 106c, 106d, 106e or 106f.

It should also be understood that the fraud management system 100 can be centralized or distributed. In the latter case, the fraud alert can be dispatched from distributed fraud management system modules. Each module can be a specialized entity that is dedicated to monitor specific types of alerts such as, for example, alerts from a credit/calling card validation center, HLR, 800 database in the network.

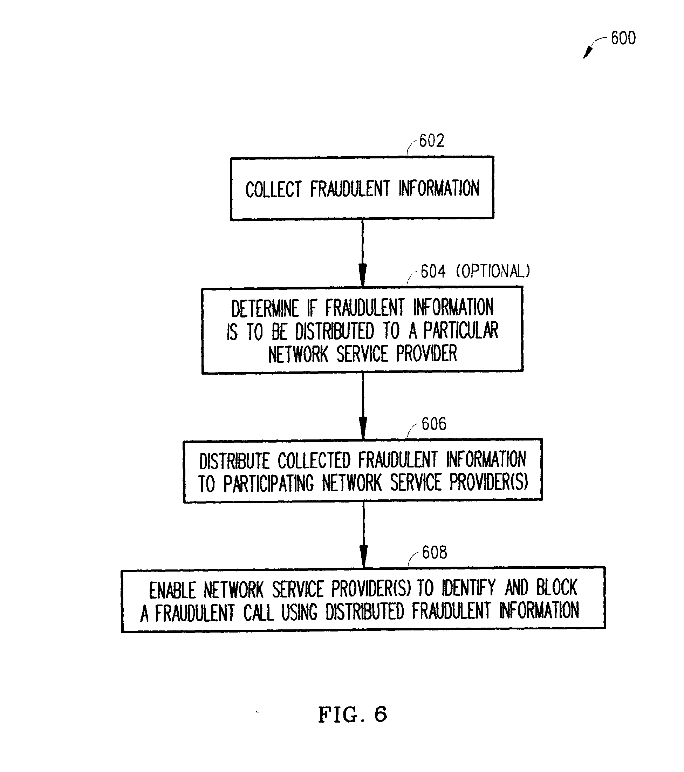

Referring to FIGURE 6, there is a flowchart illustrating the steps of the preferred method 600 of the present invention from the viewpoint of the fraud management system 100. Beginning at step 602, the controller 102 collects the fraudulent information 104. As described above, the controller 102 can receive the fraudulent information 104 from one of the network service providers 106a, 106b, 106c, 106d, 106e or 106f (see FIGURES 2-4) and/or the controller 102 can itself detect a fraud scheme and generate the fraudulent information 104 associated with the detected fraud scheme (see FIGURE 5). In addition, the fraudulent information 104 can be detected by the network service providers 106a, 106b, 106c, 106d, 106e and 106f or at the controller 102 with the use of real time analysis tools or post call analysis tools.

At step 604 (optional), the controller 102 interacts with the client profile 210 to determine whether or not the collected fraudulent information 104 is to be distributed to a particular network service provider 106a, 106b, 106c, 106d, 106e and 106f. The client profile 210 can maintain the instructions from the network service providers 106a, 106b, 106c, 106d, 106e and 106f which indicate how and when each provider would like to be notified if at all about the collected fraudulent information 104. For instance, network service providers 106a, 106e and 106f may only want to receive fraudulent information 104 that is classified as actual fraud and would not want to receive the fraudulent information 104 associated with Internet communications or fraudulent information 104 assigned one of the suspicious fraud levels.

At step 606, the controller 102 distributes the collected fraudulent information 104 to participating network service providers 106a, 106b, 106c, 106d, 106e and 106f. The controller 102 can distribute all the collected fraudulent information 104 to the network service providers 106a, 106b, 106c, 106d, 106e and 106f. Alternatively, the controller 102 can distribute the fraudulent information 104 to each network service provider 106a, 106b, 106c, 106d, 106e and 106f in accordance with the instructions in the client profile 210 (see step 604).

The fraud management system 100 may distribute all types of fraudulent information 104 to network service providers 106a, 106b, 106c, 106d, 106e and 106f. Following is a brief list of the possible data in the fraudulent information 104:
- Source address (IP address, URL, Telephone/Station Number etc...)
- Destination address (IP address, URL, Telephone Number etc...)
- Credit card number
- Calling card number
- Day/Date/Time information
- Source geographic information
- Destination geographic information
- Call duration
- Call type
- Forwarded to address
- Call treatment (at destination)
- Sequence (of one pattern followed by another within a time period)

Lastly, at step 608, each network service provider 106a, 106b, 106c, 106d, 106e and 106f that receives the fraudulent information 104 can then use it to quickly identify and block at origination any future fraudulent calls 110. Instead of blocking the fraudulent calls 110, the network service provider 106a, 106b, 106c, 106d, 106e and 106f could contact a law enforcement agency to try and catch the person(s) making the fraudulent calls 110. One way to catch the people that make the fraudulent calls 110 is to tap and monitor the fraudulent calls 110.

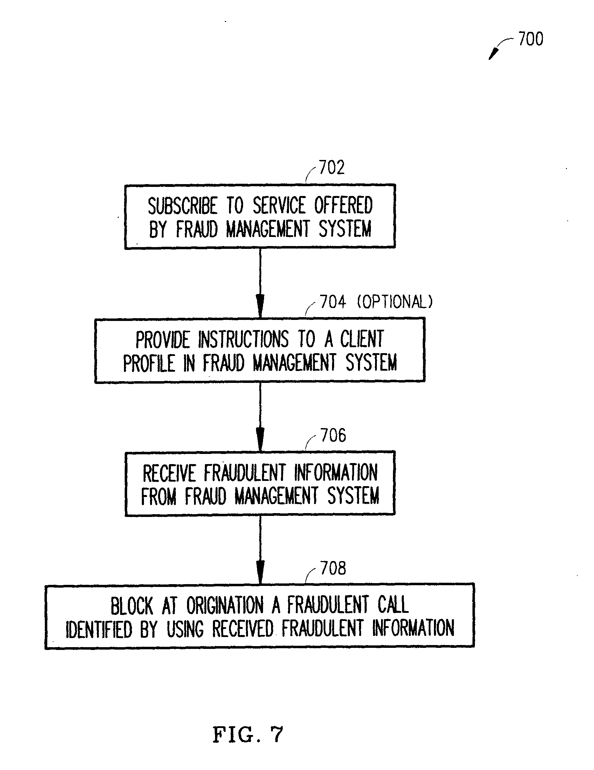

Referring to FIGURE 7, there is a flowchart illustrating the steps of the preferred method 700 of the present invention from the viewpoint of one of the network service providers 106a, 106b, 106c, 106d, 106e and 106f. Beginning at step 702, network service providers 106a, 106b, 106c, 106d, 106e and 106f would subscribe to the service offered by the fraud management system 100. As described in detail above, the fraud management system 100 effectively collects fraudulent information 104 and then distributes the collected fraudulent information 104 to participating network service providers 106a, 106b, 106c, 106d, 106e and 106f. The fraud management system 100 can receive the fraudulent information 104 from one of the network service providers 106a, 106b, 106c, 106d, 106e and 106f and/or the fraud management system 100 can itself detect a fraud scheme and generate the fraudulent information 104 associated with the detected fraud scheme.

At step 704 (optional), the network service providers 106a, 106b, 106c, 106d, 106e and 106f could provide instructions to a client profile 210 indicating the type of fraudulent information 104 they would like to receive and in what form they would like to receive the fraudulent information 104 For instance, the ISPs 106c', 106c'' and 106c''' associated with the Internet 107 may not be interested in the fraudulent information 104 related to circuit switched calls but such information may be of interest to network service providers 106a, 106b, 106d, 106e and 106f.

At step 706, in accordance with their instructions in the client profile 210, each network service provider 106a, 106b, 106c, 106d, 106e and 106f would receive the fraudulent information 104 distributed by the fraud management system 100. Alternatively, if the network service providers 106a, 106b, 106c, 106d, 106e and 106f did not provide instructions to the client profile 210 at step 704, then the fraudulent management system 100 could distribute all the collected fraudulent information to network service providers 106a, 106b, 106c, 106d, 106e or 106f. Of course, there can be some network service providers that provide instructions to the client profile 210 and other network service providers that do not provide instructions to the client profile 210.

Lastly at step 708, upon receiving the fraudulent information 104 the network service providers 106a, 106b, 106c, 106d, 106e any 106f can quickly block at origination any future fraudulent calls 110 that can be identified by using the received fraudulent information 104. Again, the network service providers 106a, 106b, 106c, 106d, 106e any 106f could contact a law enforcement agency to try and catch the person(s) making of the fraudulent calls 110.

It should be understood that the fraud management system 100 interfaces with network service providers 106a, 106b, 106c, 106d, 106e any 106f that can assume different roles. For instance, a network service provider can assume the following roles: (1) receive fraudulent information 104; (2) detect fraud and notify the fraud management system 100; and/or (3) detect fraud and notify the fraud management system 100 and receive fraud alerts from the fraud management system 100.

From the foregoing, it can be readily appreciated by those skilled in the art that the present invention provides a fraud management system and method that are capable of collecting fraudulent information and distributing that fraudulent information to multiple network service providers. As disclosed, the network service providers that subscribe to the service of the present invention can effectively and quickly block at origination any fraudulent calls that can be identified by using the distributed fraudulent information.

Although several embodiments of the present invention has been illustrated in the accompanying Drawings and described in the foregoing Detailed Description, it should be understood that the invention is not limited to the embodiments disclosed, but is capable of numerous rearrangements, modifications and substitutions without departing from the spirit of the invention as set forth and defined by the following claims.

## Claims

1. A fraud management system (100) comprising:
a controller (102) capable of collecting fraudulent information (104) and further capable of distributing the collected fraudulent information to participating network service providers (106) thus enabling each network service provider to identify a fraudulent call (110) using the distributed fraudulent information.

2. The fraud management system of Claim 1, further comprising a client profile (210) capable of storing information indicating when each network service provider would like to be notified if at all about the collected fraudulent information and further indicating what type of fraudulent information each network service provider would like to receive.

3. The fraud management system of Claim 1, wherein said controller is further capable of receiving the fraudulent information from one of the network service providers.

4. The fraud management system of Claim 1, wherein said controller is further capable of detecting a fraud scheme and generating the fraudulent information based on the detected fraud scheme.

5. The fraud management system of Claim 1, wherein each network service provider can be associated with a wireline network (106a), a wireless network (106b) or an Internet (107).

6. The fraud management system of Claim 1, wherein said fraudulent information includes a new fraudulent scheme or a new fraudulent number.

7. The fraud management system of Claim 1, wherein said fraudulent information is obtained by using real time tools or post call tools.

8. The fraud management system of Claim 1, wherein said fraudulent information includes an Internet Protocol address that is responsible for a focused overload Internet data attack.

9. A method (600) for distributing fraudulent information (104) to at least one network service provider (106), said method comprising the steps of:
collecting (602) the fraudulent information; and
distributing (606) the fraudulent information to said participating network service providers thus enabling (608) each network service provider to identify a fraudulent call (110) using the distributed fraudulent information.

10. The method of Claim 9, further comprising the step of interacting (604) with a client profile (210) to determine if the collected fraudulent information is to be distributed to a particular network service provider.

11. The method of Claim 9, further comprising the step of enabling (608) each network service provider to block at origination the fraudulent call.

12. The method of Claim 9, wherein said step of collecting further includes receiving the fraudulent information from one of the network service providers.

13. The method of Claim 9, wherein said step of collecting further includes detecting a fraud scheme and generating the fraudulent information based on the detected fraud scheme.

14. The method of Claim 9, wherein each network service provider can be associated with a wireline network (106a), a wireless network (106b) or an Internet (107).

15. The method of Claim 9, wherein said fraudulent information includes a new fraudulent scheme or a new fraudulent number.

16. The method of Claim 9, wherein said fraudulent information is obtained by using real time tools or post call tools.

17. The method of Claim 9, wherein said fraudulent information includes an Internet Protocol address that is responsible for a focused overload Internet data attack.

18. A method (700) for receiving fraudulent information (104), said method comprising the steps of:
subscribing (702) to a service offered by a fraud management system (100) that collects fraudulent information and distributes the collected fraudulent information to at least one network service provider (106) ;
receiving (706) the fraudulent information; and
blocking (708) at origination a fraudulent call (110) identified by using the received fraudulent information.

19. The method of Claim 18, further comprising the step of providing (704) instructions to a client profile (210) indicating whether or not the collected fraudulent information is to be distributed by the fraud management system.

20. The method of Claim 18, wherein said fraud management system can collect the fraudulent information by receiving the fraudulent information from one of the network service providers.

21. The method of Claim 18, wherein said fraud management system can collect the fraudulent information by detecting a fraud scheme and generating the fraudulent information based on the detected fraud scheme.

22. A fraud management system (110) comprising:
a controller (102) capable of detecting a fraud scheme and generating fraudulent information (104) and also capable of receiving fraudulent information from an external network service provider (106);
said controller is further capable of distributing (606) the fraudulent information to a plurality of network service providers thus enabling each network service provider to block at an access point (108) any fraudulent traffic (110) identified by using the distributed fraudulent information.

23. The fraud management system of Claim 22, further comprising a client profile (210) capable of storing information indicating when each network service provider would like to be notified if at all about the fraudulent information.

24. The fraud management system of Claim 22, wherein said fraudulent information is obtained by using real time tools or post call tools.

25. The fraud management system of Claim 22, wherein said fraud management system can be centralized or distributed.
